# FASCICULE DE BREVET EUROPEEN

(11) **EP 3 972 875 B1**
(45) Date de publication et mention de la délivrance du brevet: **07.05.2025**
(21) Numéro de dépôt: 20785776.4
(22) Date de dépôt: 18.06.2020
(51) Int. Cl.: B60R 16/033

(54) **SYSTÈME DE STOCKAGE HYBRIDE D'ÉNERGIE ÉLECTRIQUE**
HYBRIDES STROMSPEICHERUNGSSYSTEM
HYBRID ELECTRICAL ENERGY STORAGE SYSTEM

(30) Priorité: 20.06.2019 FR 1906665
(43) Date de publication de la demande: 30.03.2022
(73) Titulaire: Commissariat à l'Energie Atomique et aux Energies Alternatives, 75015 Paris (FR); Renault s.a.s, 92100 Boulogne Billancourt (FR)
(72) Inventeur: PERDU, Fabien, 38054 GRENOBLE cedex 09 (FR); CHATROUX, Daniel, 38054 GRENOBLE cedex 09 (FR); GAILLARD, Frédéric, 38054 GRENOBLE cedex 09 (FR); THIVIN, Guy, 92250 LA GARENNE COLOMBES (FR)
(74) Mandataire: Brevalex
(86) Numéro de dépôt international: PCT/FR2020/051058
(87) Numéro de publication internationale: WO 2020/254767

(56) Documents cités:
- EP-A1- 3 299 223
- WO-A1-2012/076123
- US-A1- 2015 275 841
- US-A1- 2016 089 992
- US-A1- 2017 182 892

## Description

### DOMAINE TECHNIQUE

La présente invention concerne un système de stockage d'énergie électrique destiné à être raccordé à un réseau de bord d'un véhicule, le réseau de bord étant associé à un intervalle de tension admissible.

L'invention concerne également un véhicule embarquant un tel système de stockage.

L'invention s'applique au domaine du stockage d'énergie électrique, en au particulier au domaine du stockage d'énergie électrique pour l'alimentation du réseau de bord d'un véhicule.

### ÉTAT DE LA TECHNIQUE ANTÉRIEURE

Il est connu d'embarquer un système de stockage d'énergie à bord d'un véhicule, tel qu'une automobile. Le système de stockage d'énergie est raccordé au réseau de bord du véhicule, et est destiné à assurer une pluralité de fonctions (et ce dans toutes les conditions climatiques que peut rencontrer le véhicule, y compris à basse température), parmi lesquelles :
- maintenir, sur le réseau de bord, une tension suffisamment stable au regard de critères de stabilité prédéterminés ;
- fournir l'énergie nécessaire au fonctionnement en veille du véhicule lors de phases prolongées de parking, c'est-à-dire d'arrêt du véhicule ;
- fournir l'énergie nécessaire au fonctionnement des équipements auxiliaires lorsque l'alternateur (cas d'un véhicule thermique ou hybride) ou la batterie de traction (cas d'un véhicule électrique ou hybride) n'est pas en mesure de fournir ladite énergie ;
- fournir l'énergie électrique nécessaire au démarrage du moteur, dans le cas d'un véhicule thermique.

Un tel système de stockage est généralement rechargé par l'alternateur ou la batterie de traction du véhicule, selon qu'il s'agit d'un véhicule thermique ou électrique, ou encore hybride.

Par « basse température », ou encore par « temps froid » ou « à froid », il est entendu une température inférieure ou égale à 0°C (degré Celsius), par exemple inférieure ou égale à -20°C, ou encore inférieure ou égale à -30°C.

Il est connu de concevoir des systèmes de stockage d'énergie électrique comprenant des batteries réalisées au moyen de cellules de batterie lithium-ion, en particulier des cellules de batteries Li-ion comprenant des oxydes métalliques tels qu'un oxyde de nickel-manganèse-cobalt, un oxyde de nickel-cobalt-aluminium, un oxyde de cobalt, un oxyde de manganèse, un oxyde de nickel ou un oxyde de manganèse-nickel.

De telles batteries sont, notamment, exemptes de plomb, dont le législateur entend interdire l'utilisation dans les prochaines années. En outre, même à basse température (typiquement, en dessous de 0°C), de telles batteries sont susceptibles de fournir un courant important, ce qui est avantageux en cas de démarrage à froid.

Toutefois, de telles batteries Li-ion ne donnent pas entière satisfaction.

En effet, les réseaux de bord classiques, notamment dans le domaine de l'automobile, sont généralement des réseaux sur lesquels la tension doit être comprise approximativement entre 12 et 14 V (volt), en fonction de l'état opérationnel du véhicule. De tels réseaux sont encore appelés « réseaux 12 V ».

Or, les cellules de batterie à oxydes métalliques mentionnées ci-dessus présentent une tension nominale, de 3,6V à 3,7V, et une tension de fin de charge proche de 4,2V.

Par « tension nominale » d'une cellule de batterie, il est entendu, au sens de la présente invention, une tension moyenne observée aux bornes de la cellule de batterie au cours d'une phase de décharge de ladite cellule de batterie, depuis un état de charge pour lequel la tension aux bornes de la cellule de batterie est maximale (c'est-à-dire un état de charge maximal) jusqu'à un état de charge pour lequel la tension aux bornes de la cellule de batterie est minimale.

Par « tension de fin de charge » d'une cellule de batterie, il est entendu, au sens de la présente invention, la tension aux bornes de la cellule de batterie lorsque celle-ci présente un état de charge maximal.

Ainsi, une batterie obtenue par la mise en série de quatre cellules de batterie telles que mentionnées précédemment présente une tension nominale d'environ 14,5 V. Dans ce cas, une telle batterie, lorsqu'elle est connectée à un réseau 12 V, est très peu chargée (typiquement moins de la moitié de sa charge maximale). Le rapport entre l'énergie effectivement stockée et la capacité maximale de stockage est très défavorable, et se traduit par un encombrement excessif de la batterie.

En outre, une batterie obtenue par la mise en série de seulement trois cellules de batterie telles que mentionnées précédemment est en surcharge dès que la tension du réseau de bord dépasse 12,6 V (par exemple lors d'une élévation de la tension imposée par l'alternateur ou la batterie de traction), ce qui se traduit par des risques d'endommagement irréversible de la batterie, voire d'explosion. Une telle élévation de tension a, par exemple, lieu lors d'une phase de freinage du véhicule avec récupération de l'énergie cinétique. Selon un autre exemple, une telle élévation de tension se produit lors de l'actionnement d'équipements à consommation d'énergie élevée, tels qu'un dispositif de dégivrage, une telle élévation de tension ayant pour objectif d'accroître la puissance fournie à l'équipement.

Il est également connu de réaliser des batteries au moyen de cellules de batterie dont une électrode positive comprend du phosphate de fer, encore appelées « cellules LFP ».

Une cellule LFP présente un plateau de tension proche de 3,3 V. Dans ce cas, une batterie réalisée par la mise en série de quatre cellules LFP présente à ses bornes, sur une large plage d'état de charge de ses cellules de batteries, typiquement entre 10% et 90%, une tension proche de 13,2 V, compatible avec les exigences d'un réseau de bord 12 V.

En revanche, les cellules LFP présentent une résistance interne élevée à basse température. Ainsi, la puissance disponible diminue fortement lorsque la température descend en-dessous de 0°C.

Il en résulte que, pour satisfaire aux exigences imposées par le réseau de bord, les batteries à base de cellules LFP sont généralement surdimensionnées, c'est-à-dire que leur capacité de stockage est conditionnée par la puissance qu'elles sont susceptibles de fournir à froid, et qu'elles embarquent plus d'énergie que nécessaire. Ceci induit un coût, une masse, et un encombrement élevés.

Le document US2017/182 892 A1 divulgue un système de stockage.

En outre, bien que la mise en série de sept cellules de batteries Li-ion comprenant des oxydes métalliques telles que citées précédemment soit susceptible de fournir une tension compatible avec un réseau 24 V, de telles cellules ne sont pas satisfaisantes, dans la mesure où une telle tension est accessible pour une plage d'état de charge restreinte desdites cellules. Le rapport entre l'énergie stockée et la capacité maximale de stockage est donc défavorable, et se traduit par un encombrement excessif de la batterie. Un but de l'invention est donc de proposer un système de stockage d'énergie électrique qui soit moins coûteux, moins encombrant, et plus performant que les systèmes de stockages classiques décrits ci-dessus.

### EXPOSÉ DE L'INVENTION

A cet effet, l'invention a pour objet un système de stockage d'énergie électrique du type précité, comprenant un premier connecteur et un deuxième connecteur pour sa connexion au réseau de bord, une première batterie, une deuxième batterie, un interrupteur et un organe de commande de l'état de l'interrupteur,
la première batterie étant agencée entre le premier connecteur et le deuxième connecteur, la première batterie comprenant une pluralité de premiers organes de stockage reliés en série,
la première batterie étant configurée pour présenter, entre ses bornes, une première tension appartenant à l'intervalle de tension admissible lorsque chacun des premiers organes de stockage présente un état de charge dans une plage d'état de charge prédéterminée, par exemple entre 10% et 100%,
la deuxième batterie étant connectée en série avec l'interrupteur entre le premier connecteur et le deuxième connecteur, la deuxième batterie comprenant une pluralité de deuxièmes organes de stockage reliés en série,
la deuxième batterie étant configurée pour présenter, entre ses bornes, une deuxième tension au-delà de l'intervalle de tension admissible lorsque chacun des deuxièmes organes de stockage est chargé,
la deuxième batterie présentant, dans une plage de température prédéterminée, une résistance interne inférieure à la résistance interne de la première batterie dans la plage de température prédéterminée,
l'organe de commande étant configuré pour, lorsqu'une condition prédéterminée est vérifiée, commander la fermeture de l'interrupteur pour permettre la circulation de courant électrique entre la première borne et la deuxième borne à travers la deuxième batterie.

En effet, dans un tel système de stockage, la première batterie est destinée à être connectée en permanence au réseau de bord. La première batterie est destinée à maintenir la tension du réseau de bord, notamment en veille, et fournir le courant à chaud (c'est-à-dire lorsque la température est au-delà de la plage de température prédéterminée) ou à faible puissance, classiquement inférieure à une centaine de watts.

La deuxième batterie est normalement déconnectée du réseau de bord, et n'est insérée dans le réseau que lorsqu'une condition prédéterminée est vérifiée. Par exemple, la deuxième batterie est connectée au réseau de bord lorsque la tension du réseau de bord chute en dessous d'une valeur prédéterminée parce que la puissance consommée est importante et que la température du système de stockage est trop basse.

Dans ce cas, la deuxième batterie fournit le surcroît de puissance requis au bon fonctionnement du réseau de bord grâce, d'une part, à une tension à vide supérieure à celle de la première batterie, et, d'autre part, à une résistance interne, dans la plage de température prédéterminée (en particulier, à basse température), plus faible que celle de la première batterie.

Grâce à un tel fonctionnement, le dimensionnement du système de stockage selon l'invention est aisé. Plus précisément, le dimensionnement de la première batterie et de la deuxième batterie se fait de façon indépendante :
- les caractéristiques de la première batterie sont choisies en fonction de l'énergie à fournir au réseau de bord et de la tension qui doit y être maintenue ;
- les caractéristiques de la deuxième batterie sont choisies en fonction de la puissance à fournir au réseau de bord au démarrage et/ou à froid.

L'invention propose donc un système hybride optimal, qui présente une grande compacité, tout en conservant une aptitude à fonctionner par temps froid.

L'association de deux telles batteries, la première présentant, lorsqu'elle est chargée, une tension appartenant à une plage de fonctionnement du réseau de bord auquel le système de stockage est destiné à être raccordé, et la deuxième présentant, lorsqu'elle est chargée, une tension au-delà de ladite plage va à l'encontre des règles usuelles de conception des systèmes de stockage d'énergie électrique, ce qui renforce le caractère inventif de l'invention.

En effet, le recours à une batterie présentant, lorsqu'elle est chargée, une tension au-delà de la plage de fonctionnement du réseau de bord s'accompagne classiquement du recours à un convertisseur électrique à découpage pour accorder les niveaux de tension.

Suivant d'autres aspects avantageux de l'invention, le système de stockage d'énergie électrique comporte une ou plusieurs des caractéristiques suivantes, prise(s) isolément ou suivant toutes les combinaisons techniquement possibles :
- l'organe de commande est configuré pour stocker un seuil de tension prédéterminé, la condition prédéterminée étant vérifiée si la tension entre le premier connecteur et le deuxième connecteur est inférieure ou égale au seuil de tension prédéterminé ;
- l'organe de commande est configuré pour stocker au moins une tension intermédiaire en relation avec une durée correspondante, la condition prédéterminée étant vérifiée si la tension entre le premier connecteur et le deuxième connecteur est inférieure ou égale à au moins une tension intermédiaire stockée donnée pendant une durée supérieure ou égale à la durée associée ;

- l'organe de commande est, en outre, configuré pour surveiller la température d'au moins une partie du système de stockage, de préférence la température de la deuxième batterie, la condition prédéterminée étant vérifiée si, en outre, la température surveillée présente une valeur inférieure ou égale à un seuil de température prédéterminé ;
- le système de stockage comporte, en outre, un convertisseur agencé entre le premier connecteur et la deuxième batterie, et configuré pour fonctionner en tant que convertisseur élévateur de tension pour charger la deuxième batterie à partir de la première batterie et/ou du réseau de bord ;
- le convertisseur est configuré pour interrompre la charge de la deuxième batterie lorsque la tension aux bornes de la deuxième batterie atteint un plafond de tension prédéterminé ;
- le convertisseur est également configuré pour fonctionner en tant que convertisseur abaisseur de tension pour charger la première batterie à partir de la deuxième batterie ;
- chaque premier organe de stockage comprend une première cellule de batterie, ou une pluralité de premières cellules de batterie connectées en parallèle, chaque première cellule de batterie étant choisie parmi : une cellule de batterie Li-ion comportant une électrode négative comprenant du graphite et une électrode positive comprenant du phosphate de fer, une cellule de batterie Li-ion avec une électrode négative comprenant du titanate, une cellule de batterie au plomb, une cellule de batterie au nickel-zinc, ou une cellule de batterie au nickel-métal hydrure, chaque première cellule de batterie présentant, de préférence, une première tension nominale inférieure ou égale à 3,5 V ;
- chaque deuxième organe de stockage comprend une deuxième cellule de batterie, ou une pluralité de deuxièmes cellules de batterie connectées en parallèle, chaque deuxième cellule de batterie étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt, un oxyde de nickel-cobalt-aluminium, un oxyde de cobalt, un oxyde de manganèse, un oxyde de nickel, un oxyde de manganèse-nickel, une cellule de batterie Li-ion comportant une électrode négative comprenant du graphite et une électrode positive comprenant du phosphate de fer, une cellule de batterie Li-ion avec une électrode négative comprenant du titanate, une cellule de batterie au plomb, une cellule de batterie au nickel-zinc, ou une cellule de batterie au nickel-métal hydrure, chaque deuxième cellule de batterie présentant, de préférence, une deuxième tension nominale supérieure à 3,5 V ;
- le système de stockage comprend, en outre, un dispositif de stockage auxiliaire connecté entre le premier connecteur et le deuxième connecteur, le dispositif de stockage auxiliaire comprenant une pluralité de supercondensateurs connectés en série ;
- chaque supercondensateur est un supercondensateur comprenant deux électrodes non faradiques, par exemple à base de carbone activé, ou encore un supercondensateur hybride, tel qu'un supercondensateur hybride comprenant une électrode à base de graphite, une électrode à base de carbone activé, et un électrolyte comprenant un sel de lithium, de sodium ou de potassium ;
- la première batterie comporte quatre premiers organes de stockage en série, chaque premier organe de stockage comprenant une première cellule de batterie, ou une pluralité de premières cellules de batterie connectées en parallèle, chaque première cellule de batterie étant une cellule de batterie Li-ion comportant une électrode négative comprenant du graphite et une électrode positive comprenant du phosphate de fer, et, de préférence, la deuxième batterie comportant au moins quatre deuxièmes organes de stockage en série, chaque deuxième organe de stockage comprenant une deuxième cellule de batterie, ou une pluralité de deuxièmes cellules de batterie connectées en parallèle, chaque deuxième cellule de batterie étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt, un oxyde de nickel-cobalt-aluminium, un oxyde de cobalt, un oxyde de manganèse, un oxyde de nickel, un oxyde de manganèse-nickel, l'intervalle de tension admissible comprenant la valeur 13,2 V ;
- la première batterie comporte huit premiers organes de stockage en série, chaque premier organe de stockage comprenant une première cellule de batterie, ou une pluralité de premières cellules de batterie connectées en parallèle, chaque première cellule de batterie étant une cellule de batterie Li-ion comportant une électrode négative comprenant du graphite et une électrode positive comprenant du phosphate de fer, et, de préférence, la deuxième batterie comportant au moins huit deuxièmes organes de stockage en série, chaque deuxième organe de stockage comprenant une deuxième cellule de batterie, ou une pluralité de deuxièmes cellules de batterie connectées en parallèle, chaque deuxième cellule de batterie étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt, un oxyde de nickel-cobalt-aluminium, un oxyde de cobalt, un oxyde de manganèse, un oxyde de nickel, un oxyde de manganèse-nickel, l'intervalle de tension admissible comprenant la valeur 26,4 V.

En outre, l'invention a pour objet un véhicule comprenant un système de stockage tel que défini ci-dessus, le premier connecteur et le deuxième connecteur étant connectés à un réseau de bord du véhicule.

Suivant un autre aspect avantageux de l'invention, le véhicule est un véhicule thermique, le système de stockage comprenant un dispositif de stockage auxiliaire connecté entre le premier connecteur et le deuxième connecteur, le dispositif de stockage auxiliaire comprenant une pluralité de supercondensateurs connectés en série, le dispositif de stockage auxiliaire étant agencé dans un boîtier auxiliaire distinct d'un ou de boîtier(s) primaire(s) abritant la première batterie et la deuxième batterie, le boîtier auxiliaire étant plus proche d'un démarreur du véhicule que le(s) boîtier(s) primaire(s).

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
[Fig. 1] la figure 1 est une représentation schématique d'un premier mode de réalisation d'un système de stockage selon l'invention ; et
[Fig. 2] la figure 2 est une représentation schématique d'un deuxième mode de réalisation d'un système de stockage selon l'invention.

### EXPOSÉ DÉTAILLÉ DE MODES DE RÉALISATION PARTICULIERS

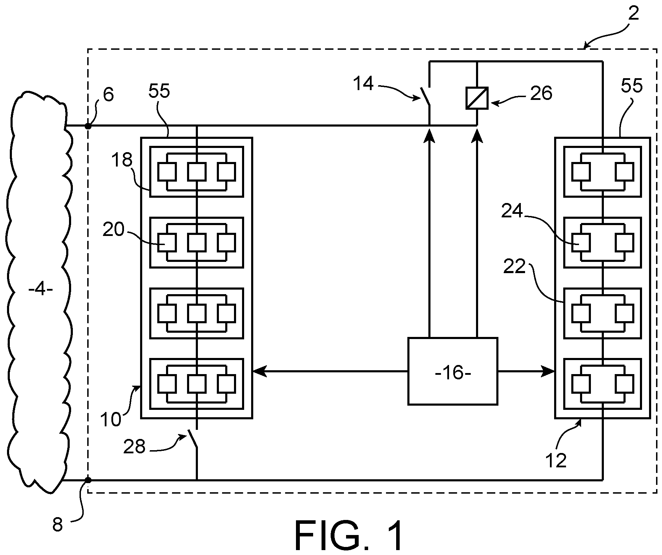

Un système 2 de stockage d'énergie électrique selon l'invention est illustré par la figure 1. Comme cela ressortira de la description qui va suivre, un tel système de stockage d'énergie est un système de stockage hybride.

Le système de stockage 2 est destiné à être raccordé à un réseau de bord 4 d'un véhicule (non représenté). Le réseau de bord 4 est associé à un intervalle de tension admissible. Classiquement, le réseau de bord 4 est également associé à des critères que le système de stockage 2 doit remplir.

A titre d'exemple illustratif, le système de stockage 2 doit remplir les critères suivants :
- stocker une énergie de l'ordre de 200 Wh (Watt heure) ;
- fournir de façon continue des courants supérieurs à 50 A (Ampère) tout en maintenant à ses bornes une tension supérieure à 11 V, même à froid (jusqu'à - 30°C) ;
- fournir un courant de démarrage présentant un pic à 500 A et une énergie de l'ordre de 2 Wh, même à froid.

Le système de stockage 2 comprend un premier connecteur 6 et un deuxième connecteur 8 pour sa connexion électrique au réseau de bord 4. Le système de stockage 2 comprend, en outre, une première batterie 10, une deuxième batterie 12, un interrupteur 14 et un organe 16 de commande de l'état de l'interrupteur 14.

La première batterie 10 est agencée entre le premier connecteur 6 et le deuxième connecteur 8, et est apte à stocker de l'énergie électrique.

La deuxième batterie 12 est connectée en série avec l'interrupteur 14 entre le premier connecteur 6 et le deuxième connecteur 8. La deuxième batterie 12 est également apte à stocker de l'énergie électrique.

L'organe de commande 16 est configuré pour commander l'état de l'interrupteur 14. Plus précisément, l'organe de commande 16 est configuré pour commander, lorsqu'une condition prédéterminée est vérifiée, la fermeture de l'interrupteur 14 pour permettre la circulation de courant électrique entre le premier connecteur 6 et le deuxième connecteur 8, à travers la deuxième batterie 12.

### Première batterie

La première batterie 10 comporte une pluralité de premiers organes de stockage 18 reliés en série.

Chaque premier organe de stockage 18 comprend une première cellule de batterie 20.

En variante, au moins un premier organe de stockage 18 comprend une pluralité de premières cellules de batterie 20 connectées en parallèle. Dans ce cas, les premières cellules de batterie 20 connectées en parallèle sont, de préférence identiques, ou encore présentent une tension nominale similaire.

Il résulte de ce qui précède que la tension aux bornes de chaque premier organe de stockage 18 est égale à la tension aux bornes de chaque première cellule de batterie 20 qu'il comporte.

Le nombre de premiers organes de stockage 18 est choisi de sorte que, lorsque chacun des premiers organes de stockage 18 présente un état de charge dans une plage d'état de charge prédéterminée, la première batterie 10 présente, à ses bornes, une tension appartenant à l'intervalle de tension admissible. Par exemple, la plage d'état de charge prédéterminée s'étend de 10% à 100%.

Selon un mode de réalisation préféré, chaque première cellule de batterie 20 est une cellule de batterie Li-ion comportant une électrode négative comprenant du graphite et une électrode positive comprenant du phosphate de fer (dite « cellule LFP »).

Le recours à de telles cellules LFP est avantageux, dans la mesure où elles présentent un plateau de tension d'environ 3,3 V pour un état de charge allant d'environ 10% à environ 90%, et une tension d'environ 3 V à l'état déchargé. Il en résulte que, quel que soit son état de charge, une première batterie 10 réalisée par la mise en série de quatre cellules LFP présente à ses bornes une tension compatible avec un réseau de bord associé à un intervalle de tension admissible d'environ 12 V à environ 14 V (c'est-à-dire une tension appartenant à l'intervalle de tension admissible). Ceci est très satisfaisant, notamment en comparaison avec une première batterie 10 qui serait réalisée par la mise en série de quatre cellules NMC, NCA, LCO, LMO, LNO ou LMNO (décrites ultérieurement) ; en effet, dans ce cas, la première batterie serait compatible avec un tel réseau de bord uniquement lorsque son état de charge est inférieur ou égal à 30%.

Il en résulte que le recours à des cellules LFP pour la réalisation de la première batterie 10 se traduit par un meilleur rapport énergie stockée/capacité de stockage maximum, et donc un encombrement plus faible.

En variante, chaque première cellule de batterie 20 est choisie parmi une cellule de batterie Li-ion avec une électrode négative comprenant du titanate (dite « cellule LTO »), une cellule de batterie au plomb, une cellule de batterie au nickel-zinc (dite « cellule NiZn »), ou une cellule de batterie au nickel-métal hydrure (dite « cellule NiMH »).

D'une façon plus générale, chaque première cellule de batterie 20 présente, de préférence, une première tension nominale inférieure ou égale à 3,5 V.

Par exemple, pour satisfaire aux conditions énoncées précédemment, la première batterie 10, comporte quatre organes de stockage 18, chacun comprenant sept cellules LFP en parallèle. En outre, chaque cellule LFP présente une capacité de stockage égale à 2,5 Ah (ampère heure). Dans ce cas, lorsque chaque organe de stockage 18 présente un état de charge compris entre 10% et 90%, la première batterie 10 fournit une tension égale à 13,2 V, et stocke une énergie totale égale à 231 Wh, ce qui satisfait à une partie des critères ci-dessus.

De telles cellules LFP sont, par exemple, des cellules portant la référence commerciale « 26650 M1B » du constructeur A123 Systems.

De façon optionnelle, la première batterie 10 est agencée en série avec un premier interrupteur de sécurité 28 entre le premier connecteur 6 et le deuxième connecteur 8.

Dans le cas d'un réseau de bord 4 dont l'intervalle de tension admissible comporte la valeur 24 V (par exemple, un intervalle de tension admissible allant de 24 V à environ 28 V), la première batterie 10, comporte au moins huit premiers organes de stockage 18 en série.

### Deuxième batterie

La deuxième batterie 12 comporte une pluralité de deuxièmes organes de stockage 22 reliés en série.

Chaque deuxième organe de stockage 22 comprend une deuxième cellule de batterie 24.

En variante, au moins un deuxième organe de stockage 22 comprend une pluralité de deuxièmes cellules de batterie 24 connectées en parallèle. Dans ce cas, les deuxièmes cellules de batterie 24 connectées en parallèle sont, de préférence identiques, ou encore présentent une tension nominale similaire.

Il résulte de ce qui précède que la tension aux bornes de chaque deuxième organe de stockage 22 est égale à la tension aux bornes de chaque deuxième cellule de batterie 24 qu'il comporte.

Le nombre de deuxièmes organes de stockage 22 est choisi de sorte que, lorsque chacun des deuxièmes organes de stockage 22 est chargé (c'est-à-dire lorsque que chaque deuxième cellule de batterie 24 est chargée), la deuxième batterie 12 présente, à ses bornes, une tension au-delà de l'intervalle de tension admissible.

Selon un mode de réalisation préféré, chaque deuxième cellule de batterie 24 est une cellule de batterie Li-ion comportant une électrode négative comprenant du graphite et/ou du silicium et une électrode positive comprenant au moins un oxyde métallique tel qu'un oxyde de nickel-manganèse-cobalt (NMC), un oxyde de nickel-cobalt-aluminium (NCA), un oxyde de cobalt (LCO), un oxyde de manganèse (LMO), un oxyde de nickel (LNO), un oxyde de manganèse-nickel (LMNO), ou un mélange de tels oxydes.

Le recours à de telles cellules à oxyde(s) métallique(s) confère à la deuxième batterie 12 une résistance interne très inférieure à la résistance interne de la première batterie 10, notamment à basse température, par exemple sous 0°C, en particulier sous -20°C. Par exemple, à une température de -30°C, il a été mesuré, pour la première batterie 10, une résistance d'environ 250 mΩ (milliohm), et une résistance d'environ 80 mΩ pour une deuxième batterie 12 de taille similaire.

Par conséquent, à énergie électrique stockée équivalente, la deuxième batterie 12 est susceptible de délivrer, par temps froid, un courant plus important que la première batterie 10.

En variante, chaque deuxième cellule de batterie 24 est choisie parmi une cellule LFP, une cellule LTO, une cellule NiZn, ou une cellule NiMH.

D'une façon plus générale, chaque deuxième cellule de batterie 24 présente, de préférence, une première tension nominale supérieure ou égale à 3,5 V. En outre, les deuxièmes cellules de batterie 24 sont choisies de sorte que la deuxième batterie 12 présente, dans une plage de température prédéterminée, une résistance interne inférieure à la résistance interne de la première batterie 10.

Par exemple, pour satisfaire aux conditions énoncées précédemment, la deuxième batterie 12, comporte quatre deuxièmes organes de stockage 22, chacun comprenant quinze cellules NMC en parallèle. Chaque cellule NMC présente une capacité de stockage égale à 2,5 Ah, et la tension à ses bornes est limitée à 4 V. Dans ce cas, la deuxième batterie 12 est susceptible de fournir, sous 16 V, un courant électrique allant jusqu'à 70 A à -30°C. Ceci est satisfaisant au regard des critères mentionnées précédemment.

De telles cellules NMC sont, par exemple, des cellules portant la référence commerciale « INR18650-25R » du constructeur Samsung.

Grâce à de telles caractéristiques, le système de stockage de l'exemple illustratif détaillé ci-dessus présente une masse et un volume inférieurs à ceux d'une batterie au plomb classique destinée à la même utilisation.

Dans le cas d'un réseau de bord 4 dont l'intervalle de tension admissible comprend la valeur 24 V, la deuxième batterie 12, comporte, de préférence, au moins huit deuxièmes organes de stockage 22 en série.

### Interrupteur

L'interrupteur 14 est configuré pour s'opposer à la circulation de courant entre la deuxième batterie 12 et le réseau de bord 4 lorsqu'il est dans un état ouvert (non passant), et à permettre une telle circulation lorsque l'interrupteur 14 est dans un état fermé (passant).

L'interrupteur 14 est, par exemple, un relais. Selon un autre exemple, l'interrupteur 14 est un composant à semi-conducteur, tel qu'un transistor MOSFET (de l'anglais « *Metal Oxide Semiconductor Field Effect Transistor »,* pour transistor à effet de champ à structure métal-oxyde-semiconducteur). Selon encore un autre exemple, l'interrupteur 14 est réalisé au moyen de deux transistors MOSFET en série montés en opposition, de sorte que l'interrupteur 14 est propre à s'opposer à la circulation de courant électrique dans les deux sens.

### Organe de commande

Comme indiqué précédemment, l'organe de commande 16 est configuré pour commander l'état passant ou non de l'interrupteur 14. En particulier, l'organe de commande 16 est configuré pour commander la fermeture (c'est-à-dire le basculement à un état passant) de l'interrupteur 14 lorsqu'une condition prédéterminée est vérifiée.

L'organe de commande 16 est également configuré pour surveiller la tension du réseau de bord 4.

En outre, l'organe de commande 16 est configuré pour stocker un seuil de tension U₀.

Dans ce cas, la condition prédéterminée est vérifiée si l'organe de commande 16 détecte que la tension du réseau de bord 4 présente une valeur inférieure ou égale au seuil de tension U₀. Une telle situation se présente typiquement au démarrage à froid, de sorte que la deuxième batterie 12 fournit le complément de puissance nécessaire au démarrage.

Le seuil de tension U₀ est, de préférence, la tension minimale tolérable par le réseau de bord et/ou par la première batterie 10.

En outre, l'organe de commande 16 est configuré pour maintenir l'interrupteur 14 dans un état non-passant lorsque la condition prédéterminée n'est pas vérifiée.

En particulier, l'organe de commande 16 est configuré stocker un plafond de tension Uₘₐₓ, et pour maintenir l'interrupteur 14 dans un état non-passant lorsque l'organe de commande 16 détecte que la tension du réseau de bord 4 présente une valeur supérieure ou égale au plafond de tension Uₘₐₓ.

Le plafond de tension Uₘₐₓ est, par exemple, la tension fournie par la première batterie 10 lorsque les premiers organes de stockage 18 sont chargés.

La commande de l'ouverture de l'interrupteur 14 lorsque la tension du réseau de bord 4 présente une valeur supérieure ou égale au plafond de tension Uₘₐₓ limite le risque de tension excessive sur le réseau de bord 4, susceptible d'endommager la première batterie 10 et/ou les équipements auxiliaires du véhicule, ce qui est avantageux.

De préférence, l'organe de commande est également configuré pour enregistrer une pluralité de couples (Uᵢ, Tᵢ), où Uᵢ est une tension intermédiaire de rang i, et Tᵢ est une durée de rang i correspondante, i étant un entier naturel non nul.

Les couples (Uᵢ, Tᵢ) sont tels que pour tous rangs i, i+1 successifs, Uᵢ < Vᵢ₊₁, et Tᵢ < Tᵢ₊₁. En outre, pour tout rang i, U₀ < Uᵢ < Uₘₐₓ.

Par exemple, pour un réseau de bord 4 présentant un intervalle de tension admissible comprenant la valeur 12 V, un couple possible est U₁ = 11,5 V et T₁ = 1 s (seconde).

Dans ce cas, la condition prédéterminée est également vérifiée si l'organe de commande 16 détecte que la tension du réseau de bord 4 présente une tension inférieure ou égale à au moins une tension Uᵢ enregistrée, pendant une durée supérieure ou égale à la durée Tᵢ correspondante.

De cette façon, la tolérance du réseau de bord 4 aux variations de sa tension est prise en compte pour le raccordement ou non de la deuxième batterie 12 au réseau de bord 4, ce qui est avantageux.

Avantageusement encore, l'organe de commande 16 est également configuré pour surveiller la température du système de stockage 2, en particulier la température de la deuxième batterie 12.

Dans ce cas, la condition prédéterminée est également vérifiée si l'organe de commande 16 détecte, lors du fonctionnement du système de stockage 2, c'est-à-dire lorsqu'il fournit de l'énergie électrique, que la température surveillée présente une valeur inférieure ou égale à un seuil de température prédéterminé. Avantageusement, le seuil de température prédéterminé appartient à la plage de température prédéterminée et en constitue, par exemple, la borne supérieure.

En variante, la condition prédéterminée est vérifiée si l'organe de commande 16 détecte que :
- la tension du réseau de bord 4 présente une valeur inférieure ou égale au seuil de tension U₀ ; et/ou
- la tension du réseau de bord 4 présente une tension inférieure ou égale à au moins une tension Uᵢ enregistrée, pendant une durée supérieure ou égale à la durée Tᵢ correspondante ; et/ou
- la température surveillée présente une valeur inférieure ou égale à un seuil de température prédéterminé, lors du fonctionnement du système de stockage 2.

Il est avantageux de considérer que la condition prédéterminée est vérifiée lorsque la température surveillée présente une valeur inférieure ou égale à un seuil de température prédéterminé. Ceci découle du fait que, si la deuxième batterie 12 présente une température trop basse, elle remplira plus difficilement sa fonction.

De préférence, l'organe de commande 16 est également configuré pour stocker une durée Tₘₐₓ. Dans ce cas, l'organe de commande est, en outre, configuré pour ouvrir l'interrupteur 14 à l'issue d'une durée Tₘₐₓ passée dans l'état fermé.

Ceci est avantageux car, lorsque l'interrupteur 14 est fermé, le courant fourni par la deuxième batterie 12 provoque un échauffement lié à la résistance interne de ladite deuxième batterie 12, ainsi qu'à la résistance des câblages entre la première et la deuxième batterie 10, 12. La commande de l'ouverture de l'interrupteur 14 à l'issue de la durée Tₘₐₓ limite les risques d'échauffement excessif des composants du système de stockage 2.

Dans le cas où le premier interrupteur de sécurité 28 est présent, l'organe de commande 16 est avantageusement configuré pour commander l'ouverture du première interrupteur de sécurité 28 en cas de détection d'une situation anormale, et pour maintenir le premier interrupteur de sécurité en position fermée sinon. Une situation anormale est, par exemple, au niveau du réseau de bord 4, une surtension, une sous-tension, une surintensité en charge ou en décharge. Selon un autre exemple, une telle situation anormale survient lorsqu'une température surveillée est en-dehors d'une plage de température admissible prédéterminée.

Avantageusement, l'organe de commande 16 est également configuré pour commander l'ouverture de l'interrupteur 14 en cas de détection d'une situation anormale. Une telle situation anormale est, par exemple, au niveau du réseau de bord 4, une surtension, une sous-tension, une surintensité en charge ou en décharge. Selon un autre exemple, une telle situation anormale survient lorsqu'une température surveillée est en-dehors d'une plage de température admissible prédéterminée.

Avantageusement, l'organe de commande 16 est configuré pour déterminer, à tout instant, la tension aux bornes de la deuxième batterie 12. Lorsque ladite tension dépend fortement de l'état de charge de la deuxième batterie (ce qui est, par exemple, le cas des batteries comprenant des cellules NMC, NCA, LMO, LNO, LMNO), l'organe de commande 16 est configuré pour déterminer l'état de charge de la deuxième batterie 12 à partir de la tension à ses bornes.

En outre, l'organe de commande 16 est avantageusement configuré pour, à chaque connexion de la deuxième batterie 12, analyser le saut de tension résultant d'une telle connexion pour en déduire la résistance interne de la deuxième batterie 12. Une telle mesure permet de diagnostiquer l'état de vieillissement de la deuxième batterie 12. Dans ce cas, l'organe de commande 16 est apte à délivrer, à partir de la tension aux bornes de la deuxième batterie 12 et de sa résistance interne, un signal indiquant que l'état de la deuxième batterie 12 lui permet d'assurer ou non sa fonction de sécurité.

En variante, l'organe de commande 16 est configuré pour être connecté à un réseau de données du véhicule afin de recevoir des informations de la part des calculateurs du véhicule. Dans ce cas, l'organe de commande 16 est configuré pour prédire la réalisation de la condition prédéterminée.

### Convertisseur

De façon avantageuse, le système de stockage 2 comprend, en outre, un convertisseur 26 agencé entre le premier connecteur 6 et la deuxième batterie 12, par exemple en parallèle de l'interrupteur 14. Le convertisseur 26 est un convertisseur DC-DC.

Le convertisseur 26 est, par exemple, commandé par l'organe de commande 16.

Le convertisseur 26 est configuré pour recharger la deuxième batterie 12 à partir du réseau de bord 4 et/ou de la première batterie 10, à une tension supérieure à celle du réseau de bord 4. Dans ce cas, le convertisseur 26 est apte à fonctionner en tant que convertisseur élévateur de tension.

Dans ce cas, le convertisseur 26 est avantageusement configuré pour établir entre les bornes de la deuxième batterie 12, au cours de sa charge, une tension de charge strictement inférieure à une tension maximale de la batterie 12. Ceci a pour effet avantageux de maximiser la durée de vie de la deuxième batterie 12.

Avantageusement, le convertisseur 26 est configuré pour interrompre la charge de la deuxième batterie 12 lorsque la tension aux bornes de la deuxième batterie 12 atteint un plafond de tension prédéterminé. Le plafond de tension prédéterminé est choisi strictement inférieur à une telle tension maximale pouvant être obtenue aux bornes de la deuxième batterie 12. Ceci a pour effet de prolonger la durée de vie des cellules de batterie de la deuxième batterie 12, ce qui est avantageux.

Par exemple, dans l'exemple décrit précédemment, la tension maximale pouvant être obtenue aux bornes de chaque cellule NMC vaut 4,2 V, ce qui correspond à une tension maximale aux bornes de la deuxième batterie valant 16,8 V. Le plafond de tension prédéterminé est, par exemple, choisi égale à 16V.

Avantageusement, le convertisseur 26 est également apte à fonctionner en tant que convertisseur abaisseur de tension, en particulier pour recharger la première batterie 10 à partir de la deuxième batterie 12.

De manière préférée, le convertisseur 26 est un convertisseur de faible puissance, de quelques watts à quelques dizaines de watts, correspondant à des courants de sortie de quelques ampères, ce qui limite les coûts de fabrication du système de stockage 2. D'une façon plus générale, par « faible puissance », il est entendu une puissance négligeable devant la puissance électrique fournie par le système de stockage 2 au réseau de bord 4.

Par exemple, dans l'exemple illustratif décrit précédemment, le convertisseur 26 est dimensionné pour la circulation d'un courant ne dépassant pas 2 A.

Avantageusement, l'organe de commande 16 est configuré de façon à piloter le convertisseur 26 de sorte que la deuxième batterie 12 présente, à ses bornes, une tension optimale (c'est-à-dire un état de charge optimal) au cours du temps. Une telle tension optimale est, notamment, fonction de la température de la deuxième batterie 12.

En effet, plus la température est élevée, plus le vieillissement de la deuxième batterie 12 s'accélère lorsqu'elle est très chargée. Inversement, plus la température est basse, plus le besoin de puissance provenant de la deuxième batterie 12 est grand, et la puissance disponible est d'autant plus grande qu'elle est chargée. Ainsi, il est souhaitable que la deuxième batterie soit plus chargée par temps froid, et moins chargée par temps chaud.

Toutefois, une modification trop fréquente de l'état de charge de la deuxième batterie 12 est susceptible de se traduire par des pertes d'énergie. Aussi, l'organe de commande 16 est, de préférence, non pas configuré pour modifier, par l'intermédiaire du convertisseur 26, immédiatement l'état de charge de la deuxième batterie 12 à chaque changement de la température extérieure (notamment entre le jour et la nuit), mais plutôt pour modifier, par exemple, l'état de charge de la deuxième batterie 12 en fonction d'une température extérieure minimale mesurée au cours d'une durée d'observation prédéterminée, par exemple comprise entre une journée et un mois.

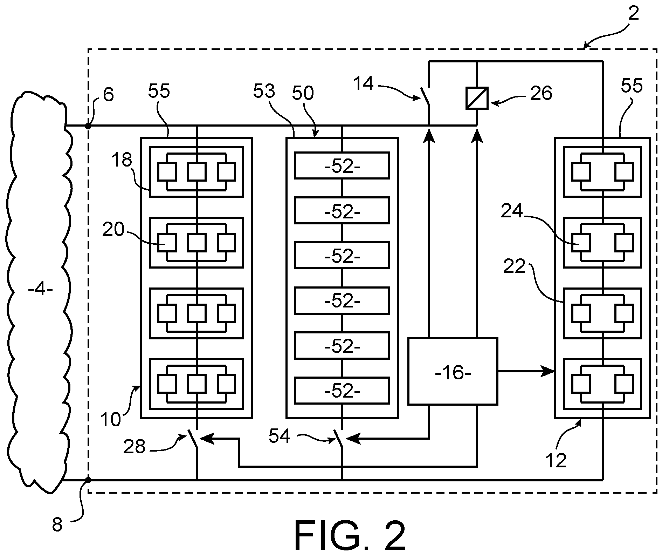

Un deuxième mode de réalisation du système de stockage 102 selon l'invention est illustré par la figure 2.

Le système de stockage 102 se distingue du système de stockage 2 de la figure 1 uniquement en ce qu'il comporte, en outre, un dispositif de stockage auxiliaire 50 d'énergie électrique connecté en parallèle de la première batterie 10, entre le premier connecteur 6 et le deuxième connecteur 8.

Le dispositif de stockage auxiliaire 50 comprend une pluralité de supercondensateurs 52 en série.

Par exemple, au moins un supercondensateur 52 est un supercondensateur comprenant deux électrodes non faradiques, par exemple à base de carbone activé.

Selon un autre exemple, au moins un supercondensateur 52 est un supercondensateur hybride, tel qu'un supercondensateur hybride comprenant une électrode à base de graphite, une électrode à base de carbone activé, et un électrolyte comprenant un sel de lithium, de sodium ou de potassium.

De tels supercondensateurs hybrides possèdent un comportement proche de celui des supercondensateurs, tout en présentant une densité d'énergie supérieure, ce qui autorise une réduction de l'encombrement global du système de stockage 2.

Par exemple, pour satisfaire aux conditions énoncées précédemment, le dispositif de stockage auxiliaire 50 comprend six supercondensateurs 52 en série, présentant chacun une tension maximale de charge de 2,7 V. Dans ce cas, lorsque chaque cellule de batterie 20 présente sa tension nominale à ses bornes, chaque supercondensateur présente une tension de 2,2 V à ses bornes. Cette tension est significativement inférieure à la tension maximale de charge, ce qui réduit le vieillissement et l'autodécharge des supercondensateurs 52. Par exemple, la capacitance de chaque supercondensateur 52 est de 1200 F (farad), de sorte que leur assemblage en série, c'est-à-dire le dispositif de stockage auxiliaire, présente une capacitance de 200 F.

De tels supercondensateurs sont, par exemple, des supercondensateurs de type EDLC (de l'anglais « *Electric Double Layer Capacitor* », signifiant condensateur à double couche électrique), portant la référence commerciale « BCAP1200 P270 K04 » du constructeur Maxwell Technologies.

La présence du dispositif de stockage auxiliaire 50 est avantageuse, en particulier pour une utilisation à bord d'un véhicule thermique ou hybride. En effet, dans ce cas, le fort courant (typiquement plusieurs centaines d'ampères) nécessaire au démarrage ou au redémarrage (cas des véhicules dits « microhybrides », ou, en anglais, « *stop & start* ») est essentiellement fourni par les supercondensateurs, ce qui limite une dégradation de la première et la deuxième batterie 10, 12 qui serait due à un tel appel de courant.

La présence du dispositif de stockage auxiliaire 50 est également avantageuse dans la mesure où les supercondensateurs stabilisent la tension du réseau de bord 4. En particulier, le dispositif de stockage auxiliaire 50 minimise l'amplitude du front de tension causé par la connexion de la deuxième batterie 12 au réseau de bord 4 lors de la fermeture de l'interrupteur 14, ou la déconnexion de la deuxième batterie 12 du réseau de bord 4 lors de l'ouverture de l'interrupteur 14, ou encore par la connexion/déconnexion de tout équipement auxiliaire au/du réseau de bord 4.

Dans une variante, le dispositif de stockage auxiliaire 50 est agencé en série avec un interrupteur auxiliaire 54 entre le premier connecteur 6 et le deuxième connecteur 8. Dans ce cas, l'organe de commande 16 est configuré pour commander l'ouverture de l'interrupteur auxiliaire 54 en cas de détection d'une situation anormale, et pour maintenir l'interrupteur auxiliaire 54 en position fermée sinon. Une telle situation anormale est, par exemple, une surtension, une sous-tension, ou une surintensité en charge ou en décharge au niveau du réseau de bord 4.

De préférence, l'organe de commande 16 est également configuré pour commander l'ouverture de l'interrupteur auxiliaire 54 en cas de phases d'inutilisation prolongée. Une telle commande, d'une part, réduit la tension des supercondensateurs 52, ce qui augmente leur durée de vie, et, d'autre part, ralentit une décharge de la première batterie 10 à travers l'autodécharge des supercondensateurs 52.

Dans une variante, et en particulier lorsque le système de stockage 102 est destiné à être raccordé à un réseau de bord d'un véhicule thermique, le dispositif de stockage auxiliaire 50 est agencé dans un boîtier, dit « boîtier auxiliaire 53 », distinct d'un ou de plusieurs boîtier(s), dit(s) « boîtier(s) primaire(s) 55 » abritant la première et la deuxième batterie 10, 12. Dans ce cas, le boîtier auxiliaire 53 est agencé plus près du démarreur du véhicule que le(s) boîtier(s) primaire(s) 55.

Les courants délivrés par le dispositif de stockage auxiliaire 50 lors du démarrage sont bien plus forts que ceux délivrés par les première et deuxième batteries 10, 12, de sorte que les diamètres des fils conducteurs reliant le dispositif de stockage auxiliaire 50 au démarreur sont supérieurs. Agencer le boîtier auxiliaire 53 près du démarreur autorise une réduction de leur longueur, ce qui, d'une part, présente un avantage économique et, d'autre part, réduit les pertes par effet Joule.

Les supercondensateurs étant généralement susceptibles de tolérer des températures plus élevées que les cellules de batteries, un tel agencement n'est pas préjudiciable au bon fonctionnement du système de stockage 102.

En outre, la première batterie 10 et la deuxième batterie 12 sont, de préférence, placées à l'écart du démarreur, par exemple hors du capot moteur (dans le coffre, sous les sièges, etc.). Un tel agencement est avantageux, dans la mesure où, dans ce cas, la première batterie 10 et la deuxième batterie 12 sont soumis à une plage de température moins importante, ce qui a pour effet d'augmenter leurs durées de vie.

## Revendications

1. Système (2) de stockage d'énergie électrique, destiné à être raccordé à un réseau de bord (4) d'un véhicule, le réseau de bord (4) étant associé à un intervalle de tension admissible, le système de stockage (2) comprenant un premier connecteur (6) et un deuxième connecteur (8) pour sa connexion au réseau de bord (4), une première batterie (10), une deuxième batterie (12), un interrupteur (14) et un organe de commande (16) de l'état de l'interrupteur (14),
la première batterie (10) étant agencée entre le premier connecteur (6) et le deuxième connecteur (8), la première batterie (10) comprenant une pluralité de premiers organes de stockage (18) reliés en série,
la première batterie (10) étant configurée pour présenter, entre ses bornes, une première tension appartenant à l'intervalle de tension admissible lorsque chacun des premiers organes de stockage (18) présente un état de charge dans une plage d'état de charge prédéterminée, par exemple entre 10% et 100%,
la deuxième batterie (12) étant connectée en série avec l'interrupteur (14) entre le premier connecteur (6) et le deuxième connecteur (8), la deuxième batterie (12) comprenant une pluralité de deuxièmes organes de stockage (22) reliés en série,
la deuxième batterie (12) étant configurée pour présenter, entre ses bornes, une deuxième tension au-delà de l'intervalle de tension admissible lorsque chacun des deuxièmes organes de stockage (22) est chargé,
la deuxième batterie (12) présentant, dans une plage de température prédéterminée, une résistance interne inférieure à la résistance interne de la première batterie (10) dans la plage de température prédéterminée,
l'organe de commande (16) étant configuré pour, lorsqu'une condition prédéterminée est vérifiée, commander la fermeture de l'interrupteur (14) pour permettre la circulation de courant électrique entre la première borne (6) et la deuxième borne (8) à travers la deuxième batterie (12).

2. Système de stockage (2) selon la revendication 1, dans lequel l'organe de commande (16) est configuré pour stocker un seuil de tension prédéterminé, la condition prédéterminée étant vérifiée si la tension entre le premier connecteur (6) et le deuxième connecteur (8) est inférieure ou égale au seuil de tension prédéterminé.

3. Système de stockage (2) selon la revendication 1 ou 2, dans lequel l'organe de commande (16) est configuré pour stocker au moins une tension intermédiaire en relation avec une durée correspondante, la condition prédéterminée étant vérifiée si la tension entre le premier connecteur (6) et le deuxième connecteur (8) est inférieure ou égale à au moins une tension intermédiaire stockée donnée pendant une durée supérieure ou égale à la durée associée.

4. Système de stockage (2) selon la revendication 3, dans lequel l'organe de commande (16) est, en outre, configuré pour surveiller la température d'au moins une partie du système de stockage (2), de préférence la température de la deuxième batterie (12), la condition prédéterminée étant vérifiée si, en outre, la température surveillée présente une valeur inférieure ou égale à un seuil de température prédéterminé.

5. Système de stockage (2) selon l'une quelconque des revendications 1 à 4, comportant, en outre, un convertisseur (26) agencé entre le premier connecteur (6) et la deuxième batterie (12), et configuré pour fonctionner en tant que convertisseur élévateur de tension pour charger la deuxième batterie (12) à partir de la première batterie (10) et/ou du réseau de bord (4).

6. Système de stockage (2) selon la revendication 5, dans lequel le convertisseur (26) est configuré pour interrompre la charge de la deuxième batterie (12) lorsque la tension aux bornes de la deuxième batterie atteint un plafond de tension prédéterminé.

7. Système de stockage (2) selon la revendication 5 ou 6, dans lequel le convertisseur (26) est également configuré pour fonctionner en tant que convertisseur abaisseur de tension pour charger la première batterie (10) à partir de la deuxième batterie (12).

8. Système de stockage (2) selon l'une quelconque des revendications 1 à 7, dans lequel chaque premier organe de stockage (18) comprend une première cellule de batterie (20), ou une pluralité de premières cellules de batterie (20) connectées en parallèle,
chaque première cellule de batterie (20) étant choisie parmi : une cellule de batterie Li-ion comportant une électrode négative comprenant du graphite et une électrode positive comprenant du phosphate de fer (LFP), une cellule de batterie Li-ion avec une électrode négative comprenant du titanate (LTO), une cellule de batterie au plomb, une cellule de batterie au nickel-zinc (NiZn), ou une cellule de batterie au nickel-métal hydrure (NiMH),
chaque première cellule de batterie (20) présentant, de préférence, une première tension nominale inférieure ou égale à 3,5 V.

9. Système de stockage (2) selon l'une quelconque des revendications 1 à 8, dans lequel chaque deuxième organe de stockage (22) comprend une deuxième cellule de batterie (24), ou une pluralité de deuxièmes cellules de batterie (24) connectées en parallèle,
chaque deuxième cellule de batterie (24) étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt (NMC), un oxyde de nickel-cobalt-aluminium (NCA), un oxyde de cobalt (LCO), un oxyde de manganèse (LMO), un oxyde de nickel (LNO), un oxyde de manganèse-nickel (LMNO), une cellule de batterie Li-ion comportant une électrode négative comprenant du graphite et une électrode positive comprenant du phosphate de fer (LFP), une cellule de batterie Li-ion avec une électrode négative comprenant du titanate (LTO), une cellule de batterie au plomb, une cellule de batterie au nickel-zinc (NiZn), ou une cellule de batterie au nickel-métal hydrure (NiMH),
chaque deuxième cellule de batterie (24) présentant, de préférence, une deuxième tension nominale supérieure à 3,5 V.

10. Système de stockage (2) selon l'une quelconque des revendications 1 à 9, comprenant, en outre, un dispositif de stockage auxiliaire (50) connecté entre le premier connecteur (6) et le deuxième connecteur (8), le dispositif de stockage auxiliaire (50) comprenant une pluralité de supercondensateurs (52) connectés en série.

11. Système de stockage (2) selon la revendication 10, dans lequel chaque supercondensateur (52) est un supercondensateur comprenant deux électrodes non faradiques, par exemple à base de carbone activé, ou encore un supercondensateur hybride, tel qu'un supercondensateur hybride comprenant une électrode à base de graphite, une électrode à base de carbone activé, et un électrolyte comprenant un sel de lithium, de sodium ou de potassium.

12. Système de stockage (2) selon l'une quelconque des revendications 1 à 11, dans lequel la première batterie (10) comporte quatre premiers organes de stockage (18) en série, chaque premier organe de stockage (18) comprenant une première cellule de batterie (20), ou une pluralité de premières cellules de batterie (20) connectées en parallèle, chaque première cellule de batterie (20) étant une cellule de batterie Li-ion comportant une électrode négative comprenant du graphite et une électrode positive comprenant du phosphate de fer, et,
de préférence, la deuxième batterie (12) comportant au moins quatre deuxièmes organes de stockage (22) en série, chaque deuxième organe de stockage (22) comprenant une deuxième cellule de batterie (24), ou une pluralité de deuxièmes cellules de batterie (24) connectées en parallèle, chaque deuxième cellule de batterie (24) étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt (NMC), un oxyde de nickel-cobalt-aluminium (NCA), un oxyde de cobalt (LCO), un oxyde de manganèse (LMO), un oxyde de nickel (LNO), un oxyde de manganèse-nickel (LMNO),
l'intervalle de tension admissible comprenant la valeur 13,2 V.

13. Système de stockage (2) selon l'une quelconque des revendications 1 à 11, dans lequel la première batterie (10) comporte huit premiers organes de stockage (18) en série, chaque premier organe de stockage (18) comprenant une première cellule de batterie (20), ou une pluralité de premières cellules de batterie (20) connectées en parallèle, chaque première cellule de batterie (20) étant une cellule de batterie Li-ion comportant une électrode négative comprenant du graphite et une électrode positive comprenant du phosphate de fer, et,
de préférence, la deuxième batterie (12) comportant au moins huit deuxièmes organes de stockage (22) en série, chaque deuxième organe de stockage (22) comprenant une deuxième cellule de batterie (24), ou une pluralité de deuxièmes cellules de batterie (24) connectées en parallèle, chaque deuxième cellule de batterie (24) étant choisie parmi : une cellule de batterie Li-ion comportant une électrode négative comprenant du graphite et/ou du silicium et une électrode positive comprenant au moins un oxyde métallique tel qu'un oxyde de nickel-manganèse-cobalt (NMC), un oxyde de nickel-cobalt-aluminium (NCA), un oxyde de cobalt (LCO), un oxyde de manganèse (LMO), un oxyde de nickel (LNO), un oxyde de manganèse-nickel (LMNO),
l'intervalle de tension admissible comprenant la valeur 26,4 V.

14. Véhicule comprenant un système de stockage (2) selon l'une des revendications 1 à 13, le premier connecteur (6) et le deuxième connecteur (8) étant connectés à un réseau de bord (4) du véhicule.

15. Véhicule selon la revendication 14, le véhicule étant un véhicule thermique,
le système de stockage (2) comprenant un dispositif de stockage auxiliaire (50) connecté entre le premier connecteur (6) et le deuxième connecteur (8), le dispositif de stockage auxiliaire (50) comprenant une pluralité de supercondensateurs (52) connectés en série, le dispositif de stockage auxiliaire (50) étant agencé dans un boîtier auxiliaire (53) distinct d'un ou de boîtier(s) primaire(s) (55) abritant la première batterie (10) et la deuxième batterie (12),
le boîtier auxiliaire (53) étant plus proche d'un démarreur du véhicule que le(s) boîtier(s) primaire(s) (55).

## Patentansprüche

1. Speichersystem (2) für elektrische Energie, das an ein Bordnetz (4) eines Fahrzeugs angeschlossen werden soll, wobei das Bordnetz (4) einem zulässigen Spannungsintervall zugeordnet ist, wobei das Speichersystem (2) einen ersten Anschluss (6) und einen zweiten Anschluss (8) für seine Verbindung mit dem Bordnetz (4), eine erste Batterie (10), eine zweite Batterie (12), einen Schalter (14) und ein Steuerelement (16) für den Zustand des Schalters (14) umfasst,
wobei die erste Batterie (10) zwischen dem ersten Anschluss (6) und dem zweiten Anschluss (8) angeordnet ist, wobei die erste Batterie (10) eine Vielzahl von in Reihe geschalteten ersten Speicherelementen (18) umfasst,
wobei die erste Batterie (10) so eingerichtet ist, dass sie zwischen ihren Klemmen eine erste Spannung aufweist, die zu dem zulässigen Spannungsintervall gehört, wenn jedes der ersten Speicherelemente (18) einen Ladezustand in einem vorbestimmten Ladezustandsbereich, beispielsweise zwischen 10 % und 100 %, aufweist,
wobei die zweite Batterie (12) mit dem Schalter (14) zwischen dem ersten Anschluss (6) und dem zweiten Anschluss (8) in Reihe geschaltet ist, wobei die zweite Batterie (12) eine Vielzahl von in Reihe geschalteten zweiten Speicherelementen (22) umfasst,
wobei die zweite Batterie (12) so eingerichtet ist, dass sie zwischen ihren Klemmen eine zweite Spannung oberhalb des zulässigen Spannungsintervalls aufweist, wenn jedes der zweiten Speicherelemente (22) geladen ist,
wobei die zweite Batterie (12) in einem vorbestimmten Temperaturbereich einen Innenwiderstand aufweist, der niedriger ist als der Innenwiderstand der ersten Batterie (10) im vorbestimmten Temperaturbereich,
wobei das Steuerelement (16) so eingerichtet ist, dass es, wenn eine vorbestimmte Bedingung überprüft wird, das Schließen des Schalters (14) steuert, um den Stromfluss zwischen der ersten Klemme (6) und der zweiten Klemme (8) durch die zweite Batterie (12) zu ermöglichen.

2. Speichersystem (2) nach Anspruch 1, wobei das Steuerelement (16) so eingerichtet ist, dass es einen vorbestimmten Spannungsschwellenwert speichert, wobei die vorbestimmte Bedingung überprüft wird, wenn die Spannung zwischen dem ersten Anschluss (6) und dem zweiten Anschluss (8) kleiner oder gleich dem vorbestimmten Spannungsschwellenwert ist.

3. Speichersystem (2) nach Anspruch 1 oder 2, wobei das Steuerelement (16) so eingerichtet ist, dass es mindestens eine Zwischenspannung in Bezug auf eine entsprechende Dauer speichert, wobei die vorbestimmte Bedingung überprüft wird, wenn die Spannung zwischen dem ersten Anschluss (6) und dem zweiten Anschluss (8) kleiner oder gleich mindestens einer bestimmten gespeicherten Zwischenspannung für eine Dauer ist, die größer oder gleich der zugehörigen Dauer ist.

4. Speichersystem (2) nach Anspruch 3, wobei das Steuerelement (16) ferner so eingerichtet ist, dass es die Temperatur mindestens eines Teils des Speichersystems (2), vorzugsweise die Temperatur der zweiten Batterie (12), überwacht, wobei die vorbestimmte Bedingung überprüft wird, wenn die überwachte Temperatur ferner einen Wert aufweist, der kleiner oder gleich einem vorbestimmten Temperaturschwellenwert ist.

5. Speichersystem (2) nach einem der Ansprüche 1 bis 4, das ferner einen Umrichter (26) umfasst, der zwischen dem ersten Anschluss (6) und der zweiten Batterie (12) angeordnet und so eingerichtet ist, dass er als Spannungsaufwärtswandler fungiert, um die zweiten Batterie (12) von der ersten Batterie (10) und/oder dem Bordnetz (4) zu laden.

6. Speichersystem (2) nach Anspruch 5, wobei der Umrichter (26) so eingerichtet ist, dass er das Laden der zweiten Batterie (12) unterbricht, wenn die Spannung an den Klemmen der zweiten Batterie eine vorbestimmte Spannungsobergrenze erreicht.

7. Speichersystem (2) nach Anspruch 5 oder 6, wobei der Umrichter (26) auch so eingerichtet ist, dass er als Spannungsabwärtswandler fungiert, um die erste Batterie (10) von der zweiten Batterie (12) zu laden.

8. Speichersystem (2) nach einem der Ansprüche 1 bis 7, wobei jedes erste Speicherelement (18) eine erste Batteriezelle (20) oder eine Vielzahl von ersten parallel geschalteten Batteriezellen (20) umfasst,
wobei jede erste Batteriezelle (20) aus Folgendem ausgewählt ist: einer Li-Ionen-Batteriezelle, die eine negative Elektrode, die Graphit umfasst, und eine positive Elektrode enthält, die Eisenphosphat (LFP) umfasst, einer Li-lonen-Batteriezelle mit einer negativen Elektrode, die Titanat (LTO) umfasst, einer Bleibatteriezelle, einer Nickel-Zink-Batteriezelle (NiZn) oder einer Nickel-Metallhydrid-Batteriezelle (NiMH),
wobei jede erste Batteriezelle (20) vorzugsweise eine erste Nennspannung aufweist, die kleiner oder gleich 3,5 V ist.

9. Speichersystem (2) nach einem der Ansprüche 1 bis 8, wobei jedes zweite Speicherelement (22) eine zweite Batteriezelle (24) oder eine Vielzahl von parallel geschalteten zweiten Batteriezellen (24) umfasst,
wobei jede zweite Batteriezelle (24) aus Folgendem ausgewählt ist: einer Li-Ionen-Batteriezelle, die eine negative Elektrode, die Graphit und/oder Silizium umfasst, und eine positive Elektrode enthält, die mindestens ein Metalloxid wie Nickel-Mangan-Kobalt-Oxid (NMC), Nickel-Kobalt-Aluminium-Oxid (NCA), Kobalt-Oxid (LCO), Mangan-Oxid (LMO), Nickel-Oxid (LNO), Mangan-Nickel-Oxid (LMNO) umfasst, einer Li-lonen-Batteriezelle, die eine negative Elektrode, die Graphit umfasst, und eine positive Elektrode enthält, die Eisenphosphat (LFP) umfasst, einer Li-lonen-Batteriezelle mit einer negativen Elektrode, die Titanat (LTO) umfasst, einer Bleibatteriezelle, einer Nickel-Zink-Batteriezelle (NiZn) oder einer Nickel-Metallhydrid-Batteriezelle (NiMH),
wobei jede zweite Batteriezelle (24) vorzugsweise eine zweite Nennspannung aufweist, die größer als 3,5 V ist.

10. Speichersystem (2) nach einem der Ansprüche 1 bis 9, das ferner eine Hilfsspeichervorrichtung (50) umfasst, die zwischen dem ersten Anschluss (6) und dem zweiten Anschluss (8) verbunden ist, wobei die Hilfsspeichervorrichtung (50) eine Vielzahl von in Reihe geschalteten Ultracaps (52) umfasst.

11. Speichersystem (2) nach Anspruch 10, wobei jeder Ultracap (52) ein Ultracap mit zwei nicht faradischen Elektroden, beispielsweise auf Aktivkohlebasis, oder auch ein Hybrid-Ultracap ist, wie ein Hybrid-Ultracap mit einer Elektrode auf Graphitbasis, einer Elektrode auf Aktivkohlebasis und einem Elektrolyt mit Lithium-, Natrium- oder Kaliumsalz.

12. Speichersystem (2) nach einem der Ansprüche 1 bis 11, wobei die erste Batterie (10) vier in Reihe geschaltete erste Speicherelemente (18) enthält, wobei jedes erste Speicherelement (18) eine erste Batteriezelle (20) oder eine Vielzahl von parallel geschalteten ersten Batteriezellen (20) umfasst, wobei jede erste Batteriezelle (20) eine Li-lonen-Batteriezelle ist, die eine negative Elektrode, die Graphit umfasst, und eine positive Elektrode enthält, die Eisenphosphat umfasst, und
wobei die zweite Batterie (12) vorzugsweise mindestens vier in Reihe geschaltete zweite Speicherelemente (22) enthält, wobei jedes zweite Speicherelement (22) eine zweite Batteriezelle (24) oder eine Vielzahl von parallel geschalteten zweiten Batteriezellen (24) umfasst, wobei jede zweite Batteriezelle (24) aus Folgendem ausgewählt ist: einer Li-lonen-Batteriezelle, die eine negative Elektrode, die Graphit und/oder Silizium umfasst, und eine positive Elektrode enthält, die mindestens ein Metalloxid wie Nickel-Mangan-Kobalt-Oxid (NMC), Nickel-Kobalt-Aluminium-Oxid (NCA), Kobalt-Oxid (LCO), Mangan-Oxid (LMO), Nickel-Oxid (LNO), Mangan-Nickel-Oxid (LMNO) umfasst,
wobei das zulässige Spannungsintervall den Wert 13,2 V umfasst.

13. Speichersystem (2) nach einem der Ansprüche 1 bis 11, wobei die erste Batterie (10) acht in Reihe geschaltete erste Speicherelemente (18) umfasst, wobei jedes erste Speicherelement (18) eine erste Batteriezelle (20) oder eine Vielzahl von parallel geschalteten ersten Batteriezellen (20) umfasst, wobei jede erste Batteriezelle (20) eine Li-lonen-Batteriezelle ist, die eine negative Elektrode, die Graphit umfasst, und eine positive Elektrode enthält, die Eisenphosphat umfasst, und
wobei die zweite Batterie (12) vorzugsweise mindestens acht in Reihe geschaltete zweite Speicherelemente (22) umfasst, wobei jedes zweite Speicherelement (22) eine zweite Batteriezelle (24) oder eine Vielzahl von parallel geschalteten zweiten Batteriezellen (24) umfasst, wobei jede zweite Batteriezelle (24) aus Folgendem ausgewählt ist: einer Li-lonen-Batteriezelle, die eine negative Elektrode, die Graphit und/oder Silizium umfasst, und eine positive Elektrode enthält, die mindestens ein Metalloxid wie Nickel-Mangan-Kobalt-Oxid (NMC), Nickel-Kobalt-Aluminium-Oxid (NCA), Kobalt-Oxid (LCO), Mangan-Oxid (LMO), Nickel-Oxid (LNO), Mangan-Nickel-Oxid (LMNO) umfasst,
wobei das zulässige Spannungsintervall den Wert 26,4 V umfasst.

14. Fahrzeug, das ein Speichersystem (2) nach einem der Ansprüche 1 bis 13 umfasst, wobei der erste Anschluss (6) und der zweite Anschluss (8) mit einem Bordnetz (4) des Fahrzeugs verbunden sind.

15. Fahrzeug nach Anspruch 14, wobei das Fahrzeug ein Fahrzeug mit Verbrennungsmotor ist,
wobei das Speichersystem (2) eine Hilfsspeichervorrichtung (50) umfasst, die zwischen dem ersten Anschluss (6) und dem zweiten Anschluss (8) verbunden ist, wobei die Hilfsspeichervorrichtung (50) eine Vielzahl von in Reihe geschalteten Ultracaps (52) umfasst, wobei die Hilfsspeichervorrichtung (50) in einem Hilfsgehäuse (53) angeordnet ist, das von einem bzw. mehreren Primärgehäusen (55) getrennt ist, die die erste Batterie (10) und die zweite Batterie (12) beherbergen,
wobei sich das Hilfsgehäuse (53) näher an einem Anlasser des Fahrzeugs als das bzw. die Primärgehäuse (55) befindet.

## Claims

1. Electrical-energy storage system (2), intended to be connected to an onboard network (4) of a vehicle, the onboard network (4) being associated with a permissible voltage range, the storage system (2) comprising a first connector (6) and a second connector (8) for its connection to the onboard network (4), a first battery (10), a second battery (12), a switch (14) and a member (16) controlling the state of the switch (14),
the first battery (10) being arranged between the first connector (6) and the second connector (8), the first battery (10) comprising a plurality of first storage members (18) connected in series,
the first battery (10) being configured to have, between its terminals, a first voltage belonging to the permissible voltage range when each of the first storage members (18) has a state of charge in a predetermined state of charge range, for example between 10% and 100%,
the second battery (12) being connected in series with the switch (14) between the first connector (6) and the second connector (8), the second battery (12) comprising a plurality of second storage members (22) connected in series,
the second battery (12) being configured to have, between its terminals, a second voltage beyond the permissible voltage range when each of the second storage members (22) is charged,
the second battery (12) having, in a predetermined temperature range, an internal resistance lower than the internal resistance of the first battery (10) in the predetermined temperature range,
the control member (16) being configured to, when a predetermined condition is verified, demand the closing of the switch (14) to allow the flow of electrical current between the first terminal (6) and the second terminal (8) through the second battery (12).

2. Storage system (2) according to claim 1, wherein the control member (16) is configured to store a predetermined voltage threshold, the predetermined condition being satisfied if the voltage between the first connector (6) and the second connector (8) is less than or equal to the predetermined voltage threshold.

3. Storage system (2) according to claim 1 or 2, wherein the control member (16) is configured to store at least one intermediate voltage in relation to a corresponding duration, the predetermined condition being satisfied if the voltage between the first connector (6) and the second connector (8) is less than or equal to at least one given stored intermediate voltage for a duration greater than or equal to the associated duration.

4. Storage system (2) according to claim 3, wherein the control member (16) is furthermore configured to monitor the temperature of at least a portion of the storage system (2), preferably the temperature of the second battery (12), the predetermined condition being satisfied if, furthermore, the monitored temperature has a value less than or equal to a predetermined temperature threshold.

5. Storage system (2) according to any one of claims 1 to 4, furthermore including a converter (26) arranged between the first connector (6) and the second battery (12), and configured to operate as a voltage-boost converter for charging the second battery (12) from the first battery (10) and/or the onboard network (4).

6. Storage system (2) according to claim 5, wherein the converter (26) is configured to interrupt charging of the second battery (12) when the voltage at the terminals of the second battery reaches a predetermined voltage ceiling.

7. Storage system (2) according to claim 5 or 6, wherein the converter (26) is also configured to operate as a buck converter for charging the first battery (10) from the second battery (12).

8. Storage system (2) according to any one of claims 1 to 7, wherein each first storage member (18) comprises a first battery cell (20), or a plurality of first battery cells (20) connected in parallel,
each first battery cell (20) being selected from: a Li-ion battery cell including a negative electrode comprising graphite and a positive electrode comprising iron phosphate (LFP), a Li-ion battery cell with a negative electrode comprising titanate (LTO), a lead battery cell, a nickel-zinc (NiZn) battery cell, or a nickel-metal hydride (NiMH) battery cell,
each first battery cell (20) preferably having a first nominal voltage less than or equal to 3.5 V.

9. Storage system (2) according to any one of claims 1 to 8, wherein each second storage member (22) comprises a second battery cell (24), or a plurality of second battery cells (24) connected in parallel,
each second battery cell (24) being selected from: a Li-ion battery cell comprising a negative electrode comprising graphite and/or silicon and a positive electrode comprising at least one metal oxide such as nickel-manganese-cobalt oxide (NMC), nickel-cobalt-aluminium oxide (NCA), cobalt oxide (LCO), manganese oxide (LMO), nickel oxide (LNO), manganese-nickel oxide (LMNO), a Li-ion battery cell including a negative electrode comprising graphite and a positive electrode comprising iron phosphate (LFP), a Li-ion battery cell with a negative electrode comprising titanate (LTO), a lead battery cell, a nickel-zinc (NiZn) battery cell, or a nickel-metal hydride (NiMH) battery cell,
each second battery cell (24) preferably having a second nominal voltage greater than 3.5 V.

10. Storage system (2) according to any one of claims 1 to 9, furthermore comprising an auxiliary storage device (50) connected between the first connector (6) and the second connector (8), the auxiliary storage device (50) comprising a plurality of supercapacitors (52) connected in series.

11. Storage system (2) according to claim 10, wherein each supercapacitor (52) is a supercapacitor comprising two non-faradic electrodes, for example based on activated carbon, or a hybrid supercapacitor, such as a hybrid supercapacitor comprising a graphite-based electrode, an activated carbon-based electrode, and an electrolyte comprising a lithium, sodium or potassium salt.

12. Storage system (2) according to any one of claims 1 to 11, wherein the first battery (10) includes four first storage members (18) in series, each first storage member (18) comprising a first battery cell (20), or a plurality of first battery cells (20) connected in parallel, each first battery cell (20) being a Li-ion battery cell including a negative electrode comprising graphite and a positive electrode comprising iron phosphate, and,
preferably, the second battery (12) comprising at least four second storage members (22) in series, each second storage member (22) comprising a second battery cell (24), or a plurality of second battery cells (24) connected in parallel, each second battery cell (24) being selected from: a Li-ion battery cell including a negative electrode comprising graphite and/or silicon and a positive electrode comprising at least one metal oxide such as nickel-manganese-cobalt oxide (NMC), nickel-cobalt-aluminium oxide (NCA), cobalt oxide (LCO), manganese oxide (LMO), nickel oxide (LNO) or manganese-nickel oxide (LMNO),
the permissible voltage range comprising the value 13.2 V.

13. Storage system (2) according to any one of claims 1 to 11, wherein the first battery (10) includes eight first storage members (18) in series, each first storage member (18) comprising a first battery cell (20), or a plurality of first battery cells (20) connected in parallel, each first battery cell (20) being a Li-ion battery cell including a negative electrode comprising graphite and a positive electrode comprising iron phosphate, and,
preferably, the second battery (12) including at least eight second storage members (22) in series, each second storage member (22) comprising a second battery cell (24), or a plurality of second battery cells (24) connected in parallel, each second battery cell (24) being selected from: a Li-ion battery cell including a negative electrode comprising graphite and/or silicon and a positive electrode comprising at least one metal oxide such as nickel-manganese-cobalt oxide (NMC), nickel-cobalt-aluminium oxide (NCA), cobalt oxide (LCO), manganese oxide (LMO), nickel oxide (LNO), or manganese-nickel oxide (LMNO),
the permissible voltage range comprising the value 26.4 V.

14. Vehicle comprising a storage system (2) according to one of claims 1 to 13, the first connector (6) and the second connector (8) being connected to an onboard network (4) of the vehicle.

15. Vehicle according to claim 14, the vehicle being a combustion vehicle,
the storage system (2) comprising an auxiliary storage device (50) connected between the first connector (6) and the second connector (8), the auxiliary storage device (50) comprising a plurality of supercapacitors (52) connected in series, the auxiliary storage device (50) being arranged in an auxiliary housing (53) separate from one or more primary housing(s) (55) housing the first battery (10) and the second battery (12),
the auxiliary housing (53) being closer to a vehicle starter than the primary housing(s) (55).
